# EUROPÄISCHE PATENTSCHRIFT

(11) **EP 3 762 634 B1**
(45) Veröffentlichungstag und Bekanntmachung des Hinweises auf die Patenterteilung: **10.09.2025**
(21) Anmeldenummer: 19709858.5
(22) Anmeldetag: 28.02.2019
(51) Int. Cl.: F16H 63/34

(54) **EINRICHTUNG ZUR BLOCKIERUNG EINES GETRIEBES**
DEVICE FOR BLOCKING A TRANSMISSION
DISPOSITIF POUR BLOQUER UNE TRANSMISSION

(30) Priorität: 07.03.2018 DE 102018203342
(43) Veröffentlichungstag der Anmeldung: 13.01.2021
(73) Patentinhaber: Robert Bosch GmbH, 70442 Stuttgart (DE)
(72) Erfinder: SARETZKI, Manfred, 70190 Stuttgart (DE); DREWE, Ingo, 23769 Fehmarn (DE)
(86) Internationale Anmeldenummer: PCT/EP2019/054988
(87) Internationale Veröffentlichungsnummer: WO 2019/170512

(56) Entgegenhaltungen:
- DE-A1- 102011 081 883
- FR-A1- 3 031 787
- JP-A- 2013 193 465

## Beschreibung

Die vorliegende Erfindung betrifft eine Einrichtung zur Blockierung eines Getriebes, die Schäden an Antrieb und Getriebe bei Fehlbedienung oder Fehlfunktion vermeidet.

### Stand der Technik

In Automatikgetrieben für Kraftfahrzeuge werden Einrichtungen zur Blockierung eines Getriebes als Parksperren eingesetzt, um ein ungewolltes Wegrollen von abgestellten Fahrzeugen zu verhindern. In der Regel werden dazu Sperrenräder mit Zahnlücken wirkverbunden in den Antriebsstrang integriert, die bei einer Aktivierung der Parksperre mittels formschlüssig in die Zahnlücken eingreifenden Sperrklinken die Drehbewegung des Antriebs blockieren. Das Parksperrenrad wird dazu mit einer der Getriebewellen wirkverbunden und mit einer groben Verzahnung versehen. Geeignete Getriebewellen sind die Antriebswelle, die Abtriebswelle oder eine Zwischenwelle. Die Zahnlücken sind symmetrisch über dem Umfang des Parksperrenrades verteilt. Ein auf die Verzahnung des Parksperrenrades angepasster Sperrenzahn ist als Gegenzahn an der Sperrklinke angeordnet. Die Sperrklinke ist beweglich im Getriebegehäuse gelagert und stützt sich gegen das Getriebegehäuse ab. Durch eine Rückstellfeder wird die Sperrklinke aktiv in der entsperrten Position gehalten. Bei der Aktivierung der Parksperre wird die Sperrklinke durch ein mechanisches Sperrelement in Richtung des Parksperrenrades gedrückt. Wenn die Verzahnung von Klinke und Parksperrenrad in Eingriff sind, wird durch das mechanische Sperrelement das Wiederausrücken der Sperrklinke gesperrt. Das mechanische Sperrelement drückt einerseits auf den Klinkenrücken in Richtung des Parksperrenrades und stützt sich andererseits über ein Gegenlager am Getriebegehäuse ab. Weiterhin ist an der mechanischen Sperrklinke eine Ausgleichsfeder angeordnet. Durch die Ausgleichsfeder wird ermöglicht, auch bei einer Zahn-auf-Zahn - Stellung des Sperrenzahns auf der Verzahnung des Parksperrenrades die Parksperre zu aktivieren. Die Parksperre befindet sich in dieser Stellung in Sperrbereitschaft. Bewegt sich das Fahrzeug während der Sperrbereitschaft weiter, wird durch den Antrieb das wirkverbundene Parksperrenrad weitergedreht. Wenn eine Zahn-auf-Lücke-Stellung des Sperrenzahns zu einer Lücke der Verzahnung des Parksperrenrades erreicht ist, rastet die Sperrklinke automatisch ein. Dies führt dazu, dass sich das Fahrzeug trotz eingelegter Parksperre noch wenige Zentimeter bewegt bis die Parksperre zum Eingriff kommt und das Fahrzeug blockiert.

Bei einer Aktivierung der Parksperre während der Fahrt des Fahrzeugs aufgrund einer Fehlbedienung oder einer Fehlfunktion versucht der Sperrenzahn der Sperrklinke in die nächste Zahnlücke einzutauchen und das Getriebe durch eine Blockierung des Parksperrenrades zu blockieren. Dreht sich das Parksperrenrad aufgrund einer Fehlbedienung oder Fehlfunktion der Parksperrenbetätigung zu schnell, dann reicht die Vorspannung der Ausgleichsfeder nicht aus, um das Sperrelement bis in seine Sperrposition zu schieben. Der Sperrenzahn wird nicht tief genug in die Zahnlücke gedrückt um die Sperrwirkung zu erreichen. Aufgrund der Drehung des Parksperrenrades wird der Sperrenzahn der Sperrklinke von der nachfolgenden Zahnflanke der Verzahnung des Sperrenrades abgewiesen und die Sperrklinke gegen die Kraft der Ausgleichsfeder in Richtung der entsperrten Position gedrückt. Der Abweisvorgang wiederholt sich an jedem Zahn des sich drehenden Parksperrenrades und wird aufgrund des charakteristischen Geräuschs als "Ratschen" bezeichnet. Die durch das Ratschen verursachten Schwingungen werden auf das System übertagen und führen zu einer erhöhten Schallabstrahlung. Dieser Abweisvorgang wiederholt sich so lange, bis die Drehgeschwindigkeit des Parksperrenrades soweit abgesunken ist, dass die Ausgleichsfeder den Sperrenzahn der Sperrklinke vollständig in eine Zahnlücke des Parksperrenrades drücken kann. Die Sperrklinke mit den Sperrenzahn und die Verzahnung des Parksperrenrades sind dann formschlüssig verbunden, das Parksperrenrad und damit das ganze Getriebe sind gesperrt. Eine Auslegungsgröße für die Parksperrenmechanik ist daher die Geschwindigkeitsschwelle des Fahrzeugs, bis zu deren Erreichen ein sicheres Einrasten der Parksperre gewährleistet sein muss und andererseits beim Überschreiten der Geschwindigkeitsschwelle des Fahrzeugs das Einrasten der Parksperre trotz aktivierter Parksperre ausgeschlossen ist.

Die Einrastgeschwindigkeit hängt hierbei von der Zähnezahl des Parksperrenrades, der Größe der Zahnlücke und des Sperrenzahns, den Steifigkeiten der Rückstellfeder und der Ausgleichsfeder, den Zahnschrägen am Parksperrenrad und am Sperrenzahn der Sperrklinke sowie den Schrägen an der Sperrklinke und am Klinkenrücken ab. Mit Hilfe dieser Parameter kann die Einrastgeschwindigkeit der Parksperre auf den gewünschten Bereich ausgelegt werden. Weiterhin ist bei der Auslegung der Parksperrenmechanik die maximal zulässige Rollstrecke des Fahrzeugs aus dem Stillstand bis zum sicheren Einrasten des Sperrenzahns in die Verzahnung des Parksperrenrades bei aktivierter Parksperre aus einer Zahn-auf-Zahn - Stellung zu berücksichtigen. Diese Rollstrecke wird durch die Übersetzung des Antriebs vom Fahrzeugrad bis zum Parksperrenrad und die Teilung des Parksperrenrades bestimmt. Außerdem sind die Materialfestigkeit und die gewünschte Lebensdauer wichtige Parameter für die Auslegung der Parksperrenmechanik.

In der EP 1 855 033 A2 wird ein Parksperrenrad mit einer gleichmäßigen Anordnung der Außenverzahnung des Parksperrenrades gezeigt. Des Weiteren ist die Sperrklinke mit dem Sperrenzahn gezeigt. Bei einer derartigen Auslegung führt das Ratschen des Sperrenzahns auf der Außenverzahnung des Parksperrenrades in nachteiliger Weise dazu, dass bei jedem Abweisvorgang des Sperrenzahns durch die Außenverzahnung des Parksperrenrades Impulse in Form von Stößen auf die Getriebemechanik und den Antrieb übertragen werden. Bei einem tiefen Eintauchen des Sperrenzahns in die Verzahnung des Parksperrenrades treten hohe Kräfte auf, die zu nachhaltigen Schädigungen im Getriebesystem führen können. Beispielsweise können Zahnschäden oder Zahnbrüche als auch Verformungen oder Brüche am Getriebegehäuse und der Parksperrenmechanik auftreten. Bei elektrischen Antriebsmaschinen können diese Stöße aufgrund des hohen Rotorträgheitsmoments der elektrischen Maschine bei einer unelastischen Anbindung zum Parksperrenrad zu Schäden durch Verrutschen des Rotors führen. Durch die periodisch wiederkehrenden Stöße beim Abweisen des Sperrenzahns beim Ratschen werden Schwingungen auf das Getriebe und den Antrieb übertragen, die zu einer erhöhten Schallabstrahlung führen. Diese periodisch wiederkehrenden Stöße können ebenfalls zu einem Aufschaukeln des mechanischen Sperrsystems führen, was zu einer verfrühten Sperrung der Parksperre bei einer zu hohen Fahrzeuggeschwindigkeit führt. Dieses Phänomen wird dadurch hervorgerufen, dass sich die Elemente der Parksperrenmechanik nicht in Phase bewegen. Damit kann der Sperrenzahn der Sperrklinke beim Ratschen zu tief in eine Zahnlücke des Parksperrenrades eintauchen. Ebenfalls kann der Sperrenzahn der Sperrklinke genau auf eine Zahnlücke des Parksperrenrades treffen und somit nicht mehr durch die Zahnflanken abgewiesen werden. Dieses frühzeitige Verriegeln der Parksperre durch das Sperrelement führt zu einem Überschreiten der geforderten Einrastgeschwindigkeit und kann das Getriebe und den Antrieb nachhaltig und irreparabel bis zum Systemausfall beschädigen.

Es besteht daher der Bedarf nach einer robusten und funktionssicheren Einrichtung zur Blockierung von Getrieben, die bei Fehlbedienung oder Fehlfunktion der Parksperre eine unerwünschte Getriebeblockierung verhindert und somit keine Schäden am Getriebe und Antrieb verursacht und auch keine erhöhte Schallabstrahlung hervorruft.

Die JP 2013 193 465 A, die DE 10 2011 081883 A1 und die FR 3 031 787 A1 offenbaren jeweils Parksperrenräder, wobei die FR 3 031 787 A1 ein Parksperrendrad mit einer ungleichmäßigen Anordnung von Zahnlücken auf dem Umfang des Pakrsperrenrades aufweist.

### Offenbarung der Erfindung

Die erfindungsgemäße Vorrichtung +hat den Vorteil, dass eine Einrichtung zur Blockierung des Getriebes geschaffen wird, die bei einer Fehlbedienung oder einer Fehlfunktion der Parksperre keine Schäden durch eine unerwünschte Getriebeblockierung verursacht. Diese Parksperre hat außerdem den Vorteil, dass sie robust und funktionssicher völlig unabhängig von zusätzlichen Überwachungen, Steuerungen und Regelungen zuverlässig das unerwünschte Blockieren des Getriebes verhindert. Weiterhin werden in vorteilhafter Weise keine zusätzlichen Schäden durch Schwingungen verursacht, welche Lager, Wellen, Zahnräder, Gehäuse und bei elektrischen Antriebssystemen auch den Rotor schädigen oder zerstören können. Überdies wird die erhöhte Abstrahlung von Schall in vorteilhafter Weise vermieden.

Erfindungsgemäß ist dazu eine Einrichtung zur Blockierung eines Getriebes mit mindestens einer Welle und mindestens einem auf der Welle koaxial und wirkverbunden angeordneten Sperrenrad vorgesehen, wobei das Sperrenrad in vorteilhafter Weise eine ungleichmäßige Anordnung von Zahnlücken auf dem Umfang des Sperrenrades aufweist, wobei die Zahnlücken asymmetrisch auf dem Umfang des Sperrenrades mit größer werdenden Winkeln Beta 1 bis Beta n zwischen den Zahnlücken angeordnet sind, wobei die Winkel Beta 1 bis Beta n die Winkel zwischen den einzelnen Zahnlücken sind und die Summe der Winkel Beta 1 bis Beta n 360° ist, und für die Winkel Beta 1 bis Beta n zwischen den auf dem Umfang des Sperrenrades angeordneten Zahnlücken die folgende Beziehung gilt:
Beta 1 > Beta 2 > Beta 3 > ... > Beta n,

Erfindungsgemäß folgt die Größe der Winkel Beta 1 ... Beta n zwischen den auf dem Umfang des Sperrenrades angeordneten Zahnlücken einer logarithmischen Stufung. Durch die ungleichmäßige Anordnung der Zahnlücken wird in vorteilhafter Weise das Parksperrensystem bei einer Fehlbedienung oder einer Fehlfunktion beruhigt und ein Aufschwingen der Sperrklinke vermieden. Günstig ist, dass damit ein tiefes Eintauchen der Sperrklinke mit dem Sperrenzahn in die Zahnlücken des Sperrenrades verhindert und Schäden an Getriebe und Antrieb vermieden werden. Ebenfalls wird die erhöhte Abstrahlung von Schall vermieden. Mit der erfindungsgemäßen logarithmischen Stufung der aufeinanderfolgenden Winkel zwischen den Zahnlücken ist der Vorteil verbunden, dass ein resonantes Aufschwingen aufgrund der logarithmischen Stufung der beruhigenden Schleifwege zuverlässig vermieden wird. Die logarithmische Stufung verhindert zusätzlich die Ausbildung von schwingungsanregenden Oberwellen.

Durch die in dem abhängigen Anspruch genannten Maßnahmen sind vorteilhafte Weiterbildungen der in dem unabhängigen Anspruch angegebenen Vorrichtung möglich.

Besonders vorteilhaft ist es, die Anzahl der Zahnlücken so zu wählen, dass sich eine Primzahl ergibt. Da Primzahlen nur durch sich selbst und durch 1 teilbar und daher auch nicht als Produkt zweier natürlichen Zahlen größer 1 darstellbar sind, ergibt sich in vorteilhafter Weise keine Anregung zur Ausbildung von resonanten Schwingungen oder Oberwellen.

Weitere Merkmale und Vorteile der vorliegenden Erfindung werden dem Fachmann aus der nachfolgenden Beschreibung beispielhafter Ausführungsformen, die jedoch nicht als die Erfindung beschränkend auszulegen sind, unter Bezugnahme auf die beigelegten Zeichnungen ersichtlich.

### Kurze Beschreibung der Zeichnungen

Es zeigen:
Fig. 1: eine schematische Darstellung einer Parksperreneinrichtung zur Blockierung des Getriebes mit einem nicht erfindungsgemäßen Sperrenrad, einer Parksperrenbetätigung und einer Sperrklinke mit einem Sperrenzahn;
Fig. 2: eine schematische Darstellung eines nicht erfindungsgemäßen Sperrenrades mit paarweise auf dem Umfang angeordneten Zahnlücken;
Fig. 3: eine schematische Darstellung eines nicht erfindungsgemäßen Sperrenrades mit paarweise auf dem Umfang angeordneten Zahnlücken, wobei eine Zahngruppe zur Erreichung einer ungeraden Zahnlückenzahl um eine Zahnlücke vermindert ist;
Fig. 4: eine schematische Darstellung eines nicht erfindungsgemäßen Sperrenrades mit paarweise auf dem Umfang angeordneten Zahnlücken, wobei eine zusätzliche Zahnlücke die vorhandenen Zähnegruppen zur Erreichung einer ungeraden Zahnlückenzahl ergänzt;
Fig. 5: eine schematische Darstellung eines erfindungsgemäßen Sperrenrades mit asymmetrisch auf dem Umfang des Sperrenrades mit größer werdenden Winkeln angeordnet Zahnlücken.

Alle Figuren sind lediglich schematische Darstellungen der Vorrichtung bzw. ihrer Bestandteile. Insbesondere Abstände und Größenrelationen sind in den Figuren nicht maßstabsgetreu wiedergegeben. In den verschiedenen Figuren sind sich entsprechende Elemente mit den gleichen Referenznummern versehen.

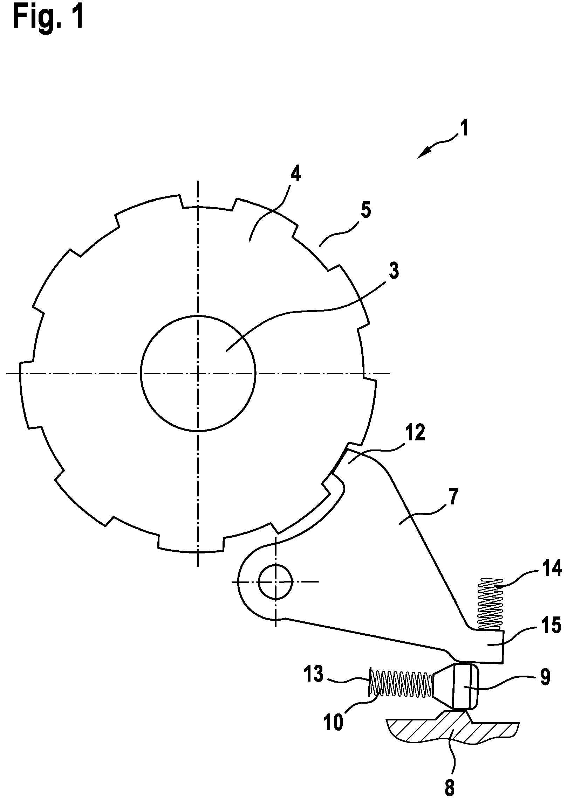

Figur 1 zeigt eine schematische Darstellung einer Parksperreneinrichtung 1 zur Blockierung des Getriebes 2 bei einem abgestellten Fahrzeug 11 mit einem nicht erfindungsgemäßen Sperrenrad 4, einem Sperrelement 9 und einer Sperrklinke 7 mit einem Sperrenzahn 12. Das Sperrenrad 4 ist mit einer Welle 3 des Getriebes 2 wirkverbunden, so dass beim Einrasten den Sperrenzahns 12 der Sperrklinke 7 das Sperrenrad 4 formschlüssig gesperrt wird und damit eine Bewegung des Getriebes 2 blockiert wird. Das Getriebe 2 ist über den Antrieb 16 mit mindestens einem Fahrzeugrad 17 eines Fahrzeugs 11 wirkverbunden, so dass das blockierte Getriebe 2 ebenfalls eine Bewegung des Fahrzeugs 11 verhindert. Das Sperrenrad 4 der Parksperreneinrichtung 1 ist mit einer groben Verzahnung versehen. Die Zähne mit den Zahnlücken 5 sind symmetrisch am Umfang des Sperrenrades angeordnet. An der Sperrklinke 7 ist ein auf die Verzahnung des Sperrenrades 4 angepasster Sperrenzahn 12 angeordnet. Die Sperrklinke 7 ist drehbar im Getriebegehäuse 8 gelagert. Die Sperrklinke 7 stützt sich über die Lagerung im Getriebegehäuse 8 ab. Die Sperrklinke 7 wird durch die Rückstellfeder 14 aktiv in der entsperrten Position gehalten. Bei Betätigung der Parksperreneinrichtung 1 wird ein mechanisches Sperrelement 9 zwischen den Klinkenrücken 15 und das Gegenlager am Getriebegehäuse 8 durch die Parksperrenbetätigung 13 gedrückt. Damit wird die Sperrklinke 7 in Richtung des Sperrenrades 4 geschwenkt und sperrt somit das Wiederausrücken der Sperrklinke 7, wenn der Sperrenzahn 12 in einer Zahnlücke 5 des Sperrenrades 4 im Eingriff ist. An dem mechanischen Sperrelement 9 befindet sich eine Ausgleichsfeder 10. Diese ermöglicht es, die Parksperrenbetätigung 13 auch bei einer "Zahn-auf-Zahn"-Stellung von Sperrenzahn 12 und Sperrenrad 4 zu aktivieren. In diesem Zustand ist die Parksperreneinrichtung 1 in Sperrbereitschaft. Rollt das Fahrzeug 11 weiter, dreht sich das über das Getriebe 2 mit seinen Wellen 3 und dem Antrieb 16 mit mindestens einem Fahrzeugrad 17 wirkverbundene Sperrenrad 4 so lange weiter, bis der Sperrenzahn 12 der Sperrklinke 7 in der nächsten Zahnlücke 5 einrastet. Dies führt dazu, dass sich das Fahrzeug 11 trotz aktivierter Parksperreneinrichtung 1 noch um wenige Zentimeter bewegen kann, bis die Blockierung des Getriebes 2 durch die Parksperreneinrichtung 1 wirksam wird.

Bei hohen Fahrgeschwindigkeiten des Fahrzeugs 11 darf die Parksperreneinrichtung 1 bei einer Fehlbedienung oder einer Fehlfunktion auf keinen Fall das Getriebe 2 und damit den Antrieb 16 blockieren, um instabile Fahrzustände des Fahrzeugs 11 durch blockierte Fahrzeugräder 17 und große Beschädigungen an Getriebe 2 und Antrieb 16 zu vermeiden. Wird in diesem Fall die Parksperrenbetätigung 13 aktiviert schiebt sich das Sperrelement 9 zusammen mit der Ausgleichsfeder 10 zwischen den Klinkenrücken 15 und das Gegenlager am Gehäuse des Getriebes 8. Die Sperrklinke 7 wird dadurch auf das Parksperrenrad 4 gedrückt, der Sperrenzahn 12 versucht in die nächste Zahnlücke 5 einzutauchen und das Getriebe 2 zu sperren. Aufgrund der Fahrbewegung des Fahrzeugs 11 dreht sich das Sperrenrad 4 zu schnell, um die Klinke 7 mit dem Sperrenzahn 12 in die Sperrposition in die Zahnlücke 5 des Sperrenrades 4 zu schieben. Die Vorspannung der Ausgleichsfeder 10 reicht dazu nicht aus. Die Sperrklinke 7 mit dem Sperrenzahn 12 wird nicht tief genug in die Zahnlücke 5 des Sperrenrades 4 gedrückt um die Sperrwirkung zu erreichen. Da sich das Sperrenrad 4 weiterdreht, wird der Sperrenzahn 12 von der nachfolgenden Zahnflanke des Sperrenrades 4 abgewiesen. Damit drückt die Klinke 7 das Sperrelement 9 gegen die Ausgleichsfeder 10 in Richtung der Entsperrposition. Dieser Abweisvorgang wiederholt sich so lange, bis sich die Drehgeschwindigkeit des Sperrenrades 4 so verlangsamt hat, dass das Sperrelement 9 die Sperrklinke 7 mit dem Sperrenzahn 12 vollständig in eine Zahnlücke 5 des Sperrenrades 4 drücken kann. Das Sperrenrad 4 ist dann formschlüssig durch den Sperrenzahn 12 der Sperrklinke 7 gesperrt.

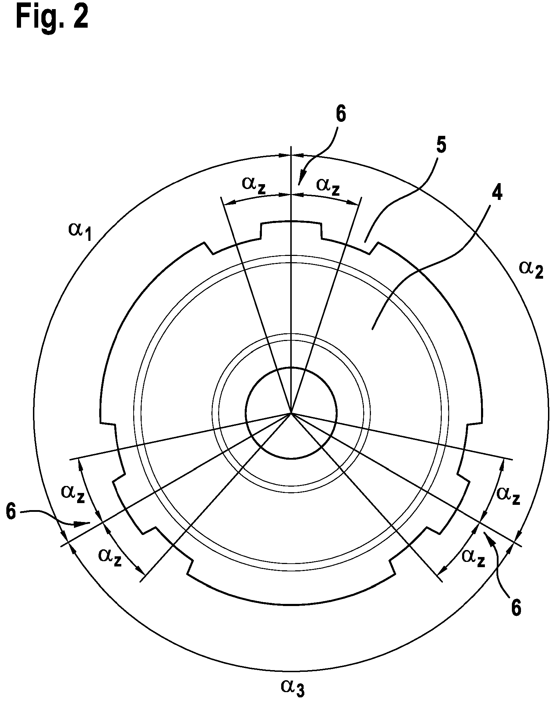

Figur 2 zeigt eine schematische Darstellung eines nicht erfindungsgemäßen Sperrenrades 4 mit Zahnlücken 5, die jeweils zu Zahngruppen 6 zusammengefasst sind. Der Winkel zwischen den Zahnlücken 5 ist jeweils gleich groß und beträgt 2 x Alpha z. Die Winkel Alpha 1 bis Alpha n zwischen den Zahngruppen 6 sind größer als der Winkel 2 x Alpha z zwischen den Zahnlücken 5 und ergeben in Summe 360°. Die Zahngruppen 6 können dabei symmetrisch auf dem Umfang des Sperrenrades 4 angeordnet sein oder mit ungleichen Winkeln Alpha 1 bis Alpha n.

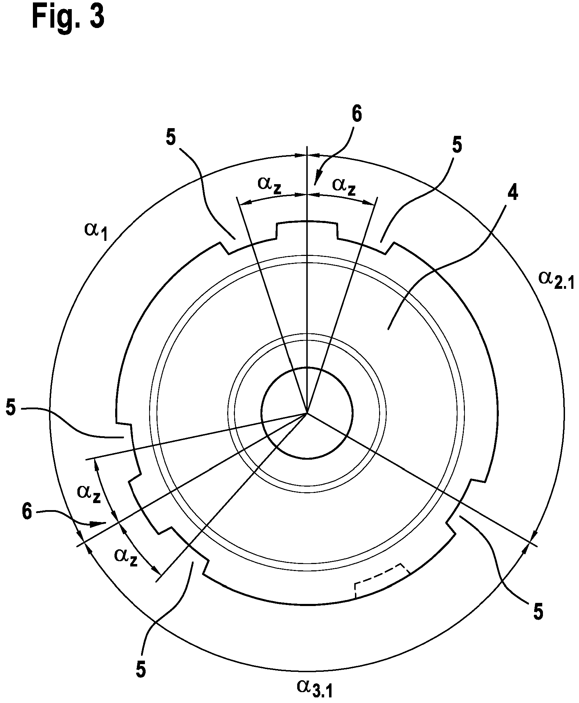

Figur 3 zeigt eine schematische Darstellung eines nicht erfindungsgemäßen Sperrenrades 4 mit ebenfalls paarweise auf dem Umfang angeordneten Zahnlücken 5, wobei mindestens eine Zahngruppe 6 zur Erreichung einer ungeraden Zahnlückenzahl um eine Zahnlücke 5 vermindert ist. Die Zahngruppen 6 können dabei ebenfalls symmetrisch auf dem Umfang des Sperrenrades 4 angeordnet sein oder mit ungleichen Winkeln Alpha 1 bis Alpha n.

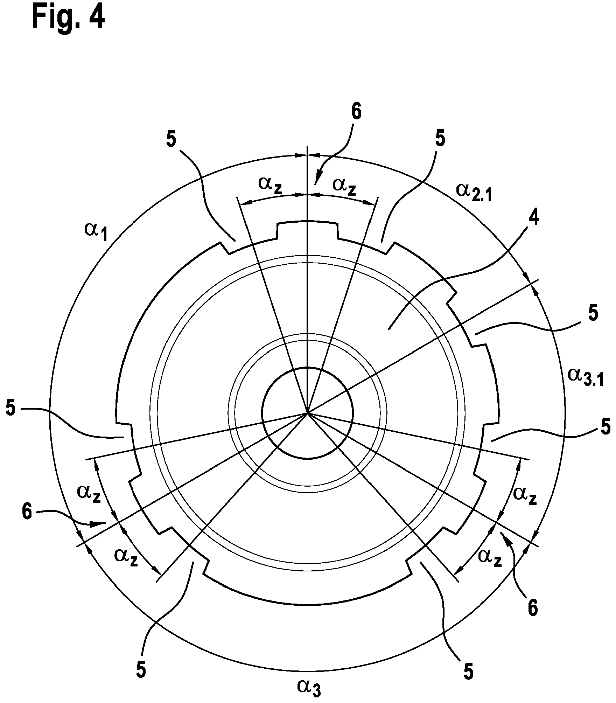

Figur 4 zeigt eine schematische Darstellung eines nicht erfindungsgemäßen Sperrenrades 4 mit ebenfalls paarweise auf dem Umfang angeordneten Zahnlücken 5, wobei die Zahngruppen 6 zur Erreichung einer ungeraden Zahnlückenzahl um mindestens eine Zahnlücke 5 ergänzt sind. Die Zahngruppen 6 können dabei wiederum symmetrisch auf dem Umfang des Sperrenrades 4 angeordnet sein oder mit ungleichen Winkeln Alpha 1 bis Alpha n.

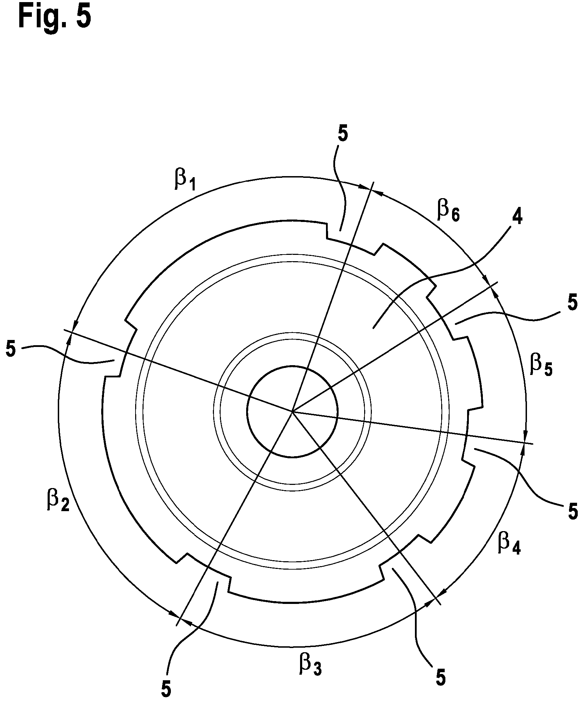

Figur 5 zeigt eine schematische Darstellung eines erfindungsgemäßen Sperrenrades 4 mit asymmetrisch auf dem Umfang des Sperrenrades 4 mit größer werdenden Winkeln angeordnet Zahnlücken 5. Die Zahnlücken 5 sind dabei mit ungleichen Winkeln Beta 1 bis Beta n auf dem Umfang des Sperrenrades 4 angeordnet. Die Winkel zwischen den einzelnen Zahnlücken 5 Beta 1 ... Beta n ergeben in Summe 360°.

## Patentansprüche

1. Einrichtung (1) zur Blockierung eines Getriebes (2) mit mindestens einer Welle (3) und mindestens einem auf der Welle (3) koaxial und wirkverbunden angeordneten Sperrenrad (4), wobei das Sperrenrad (4) eine ungleichmäßige Anordnung von Zahnlücken (5) auf dem Umfang des Sperrenrades (4) aufweist, wobei die Zahnlücken (5) asymmetrisch auf dem Umfang des Sperrenrades (4) mit größer werdenden Winkeln Beta 1 bis Beta n zwischen den Zahnlücken (5) angeordnet sind, wobei die Winkel Beta 1 bis Beta n die Winkel zwischen den einzelnen Zahnlücken (5) sind und die Summe der Winkel Beta 1 bis Beta n 360° ist, und für die Winkel Beta 1 bis Beta n zwischen den auf dem Umfang des Sperrenrades (4) angeordneten Zahnlücken (5) die folgende Beziehung gilt:
Beta 1 > Beta 2 > Beta 3 > ... > Beta n,
wobei die Größe der Winkel Beta 1 ... Beta n zwischen den auf dem Umfang des Sperrenrades (4) angeordneten Zahnlücken (5) einer logarithmischen Stufung folgt.

2. Einrichtung (1) zur Blockierung eines Getriebes (2) nach Anspruch 1, **dadurch gekennzeichnet, dass** die Anzahl der Zahnlücken (5) auf dem Umfang des Sperrenrades (4) einer Primzahl entspricht.

## Claims

1. Device (1) for blocking a transmission (2) having at least one shaft (3) and at least one ratchet wheel (4) arranged in a coaxially and operatively connected manner on the shaft (3), wherein the ratchet wheel (4) has a non-uniform arrangement of tooth gaps (5) on the circumference of the ratchet wheel (4), wherein the tooth gaps (5) are arranged asymmetrically on the circumference of the ratchet wheel (4) with increasing angles beta 1 to beta n between the tooth gaps (5), wherein the angles beta 1 to beta n are the angles between the individual tooth gaps (5) and the sum of the angles beta 1 to beta n is 360°, and the following relationship applies to the angles beta 1 to beta n between the tooth gaps (5) arranged on the circumference of the ratchet wheel (4):
beta 1 > beta 2 > beta 3 > ... > beta n,
wherein the magnitude of the angles beta 1 ... beta n between the tooth gaps (5) arranged on the circumference of the ratchet wheel (4) follows a logarithmic spacing.

2. Device (1) for blocking a transmission (2) according to Claim 1, **characterized in that** the number of tooth gaps (5) on the circumference of the ratchet wheel (4) corresponds to a prime number.

## Revendications

1. Dispositif (1) de blocage d'une transmission (2) avec au moins un arbre (3) et au moins une roue de blocage (4) disposée coaxialement et en liaison fonctionnelle sur l'arbre (3), la roue de blocage (4) comportant un agencement non uniforme d'entredents (5) sur la périphérie de la roue de blocage (4), les entredents (5) étant disposés asymétriquement sur la périphérie de la roue de blocage (4) à des angles croissants Beta 1 à Beta n entre les entredents (5), les angles Beta 1 à Beta n étant les angles entres les divers entredents (5) et la somme des angles Beta 1 à Beta n étant de 360°, la relation suivante s'appliquant pour les angles Beta 1 à Beta n entre les entredents (5) disposés sur la périphérie de la roue de blocage (4) :
Beta 1 > Beta 2 > Beta 3 > ... > Beta n,
la taille des angles Beta 1... Beta n entre les entredents (5) disposés sur la périphérie de la roue de blocage (4) suivant une échelle logarithmique.

2. Dispositif (1) de blocage d'une transmission (2) selon la revendication 1, **caractérisé en ce que** le nombre des entredents (5) sur la périphérie de la roue de blocage (4) correspond à un nombre premier.
